(19) Europäisches Patentamt

European Patent Office

Office européen des brevets

(11) Veröffentlichungsnummer: **0 026 881**
**A1**

(12) **EUROPÄISCHE PATENTANMELDUNG**

(21) Anmeldenummer: 80105835.5

(22) Anmeldetag: 26.09.80

(51) Int. Cl.³: **F 16 K 1/34**

(30) Priorität: 04.10.79 DE 2940224

(43) Veröffentlichungstag der Anmeldung: **15.04.81**
**Patentblatt 81/15**

(84) Benannte Vertragsstaaten: **CH DE FR LI**

(71) Anmelder: **HOECHST AKTIENGESELLSCHAFT, Zentrale**
**Patentabteilung Postfach 80 03 20,**
**D-6230 Frankfurt/Main 80 (DE)**

(72) Erfinder: **Ascher, Adolf, Lerchenstrasse 2,**
**D-6231 Schwalbach (DE)**
Erfinder: **Bildstein, Siegfried, Dr., Gleiwitzer-Strasse 1,**
**D-6233 Kelkheim (Taunus) (DE)**

㉔ **Ventil.**

㉗ Bei diesem Ventil mit Flansch (2) und auswechselbarem Ventilsitz (4) ist der Ventilsitz auf der Arbeitsleiste (3) des Flansches (2) angeordnet. Zum Aufnehmen und Zentrieren des Ventilsitzes kann die Arbeitsleiste des Flansches mit einer Eindrehung versehen sein.

HOECHST AKTIENGESELLSCHAFT    HOE 79/F 263    **0026881**    D.Ph.HS/sch

<u>Ventil</u>

Gegenstand der Erfindung ist ein Ventil mit Flansch und auswechselbarem Ventilsitz.

Auswechselbare Ventilsitze werden in das Ventilgehäuse eingeschraubt, eingeschrumpft oder eingepresst. Eingeschraubte Ventilsitze müssen gegen das Gehäuse besonders abgedichtet werden. Das Auswechseln von eingeschrumpften und eingepressten Ventilsitzen ist nur mit großem technischen Aufwand möglich. Es besteht demnach die Aufgabe, ein Ventil mit Flansch und auswechselbarem Ventilsitz zu schaffen, bei dem die vorerwähnten Nachteile vermieden werden und der Ventilsitz ohne öffnen des Ventilgehäuses gewechselt werden kann.

Die Aufgabe wird durch ein Ventil gelöst, das dadurch gekennzeichnet ist, daß der Ventilsitz auf der Arbeitsleiste des Flansches angeordnet ist.

Es kann vorteilhaft sein, die Arbeitsleiste des Flansches mit einer Eindrehung zur Aufnahme des Ventilsitzes zu versehen. Gegebenenfalls kann zwischen Arbeitsleiste und Ventilsitz eine Dichtung angeordnet sein.

Die Erfindung wird im folgenden anhand der lediglich ein Beispiel darstellenden Figur näher erläutert.
Das Gehäuse 1 ist mit einem Flansch 2 versehen, auf dessen Arbeitsleiste 3 der Ventilsitz 4 angeordnet ist. Im Ausführungsbeispiel ist die Arbeitsleiste 3 mit einer Eindrehung zum Aufnehmen und gleichzeitigen Zentrieren des Ventilsitzes versehen. Der Ventilsitz kann sich auch bis zur Außenkante des Flansches erstrecken. Er wird dann durch die Flanschverbindung, Schelle oder Schrauben zentriert. Zwischen Arbeitsleiste des Flansches und Ventilsitz kann gegebenenfalls eine Dichtung angeordnet sein (nicht dargestellt). 5 deutet die Ventilspindel mit Ventilkegel 6 an.

0026881

Das erfindungsgemäße Ventil ermöglicht einen Ventilsitzwechsel ohne besonderen technischen Aufwand und ohne umfangreiche Montagearbeit.  7 deutet den Auslauf des Ventils an.

HOE 79/F 263
002 6 8 8 1

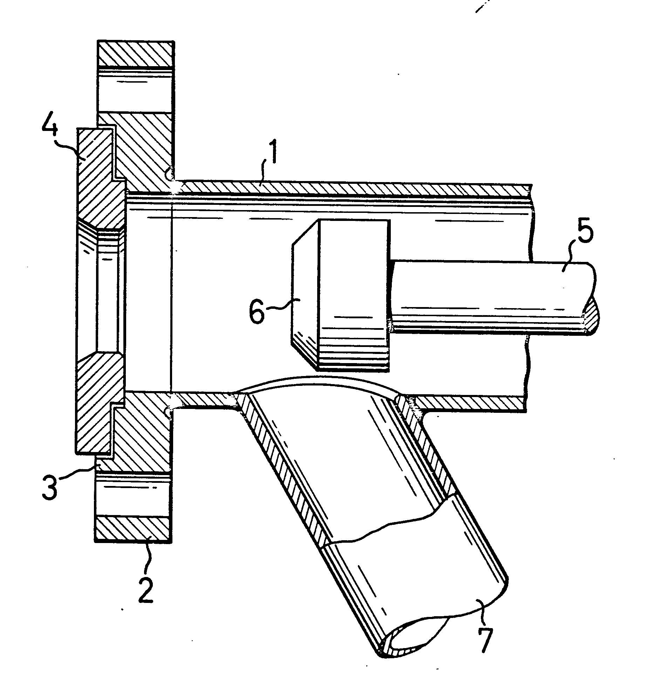

Patentansprüche:

1. Ventil mit Flansch und auswechselbarem Ventilsitz,
dadurch gekennzeichnet, daß der Ventilsitz auf der
Arbeitsleiste des Flansches angeordnet ist.

2. Ventil nach Anspruch 1, dadurch gekennzeichnet, daß die
Arbeitsleiste des Flansches eine Eindrehung zur Aufnahme
des Ventilsitzes aufweist.

Europäisches
Patentamt

**EUROPÄISCHER RECHERCHENBERICHT**

002688.1
Nummer der Anmeldung

EP 80105835.5

| | **EINSCHLÄGIGE DOKUMENTE** | | **KLASSIFIKATION DER ANMELDUNG (Int. Cl.³)** |
|---|---|---|---|
| **Kategorie** | **Kennzeichnung des Dokuments mit Angabe, soweit erforderlich, der maßgeblichen Teile** | **betrifft Anspruch** | |
| A | <u>DE - C - 8o9 506</u> (GRÖBER)<br><br>+ Seite 1, Zeilen 20-38; Seite 1, Zeile 38 - Seite 2, Zeilen 1-3 +<br><br>-- | | F 16 K 1/34 |
| A | <u>AT - B - 165 235</u> (AUBÖCK)<br><br>+ Fig. 3 +<br><br>---- | | |

**RECHERCHIERTE SACHGEBIETE (Int. Cl.³)**

F 16 K 1/OO
F 16 K 3/OO
F 16 K 13/OO
F 16 K 25/OO

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. | |
|---|---|---|
| **Recherchenort**<br>WIEN | **Abschlußdatum der Recherche**<br>21-11-1980 | **Prüfer**<br>ROUSSARIAN |

EPA form 1503.1   06.78